# EUROPÄISCHE PATENTSCHRIFT

(11) **EP 3 459 618 B1**
(45) Veröffentlichungstag und Bekanntmachung des Hinweises auf die Patenterteilung: **15.05.2024**
(21) Anmeldenummer: 17192898.9
(22) Anmeldetag: 25.09.2017
(51) Int. Cl.: B01D 63/08, B01D 63/10

(54) **FILTERVORRICHTUNG MIT STRÖMUNGSEINBAU**
FILTER DEVICE WITH FLOW MOUNTING
DISPOSITIF DE FILTRATION POURVU D'INSTALLATION D'ÉCOULEMENT

(43) Veröffentlichungstag der Anmeldung: 27.03.2019
(73) Patentinhaber: Sartorius Stedim Biotech GmbH, 37079 Göttingen (DE); DWI - Leibniz-Institut für Interaktive Materialien e.V., 52056 Aachen (DE)
(72) Erfinder: WEISSHAAR, Stefan, 37139 Adelebsen (DE); LEUTHOLD, Martin, 37079 Göttingen (DE); GRUMMERT, Ulrich, 37242 Bad Sooden-Allendorf (DE); WESSLING, Matthias, 52056 Aachen (DE); BAITALOW, Kristina, 52056 Aachen (DE); LÖLSBERG, Jonas, 52056 Aachen (DE)
(74) Vertreter: Vigand, Philippe

(56) Entgegenhaltungen:
- EP-A1- 1 731 214
- EP-A1- 3 064 266
- EP-A1- 3 064 267
- WO-A1-2006/040175
- WO-A1-2014/092969
- US-A1- 2014 175 011
- US-A1- 2014 231 339

## Beschreibung

Die Erfindung betrifft eine Filtervorrichtung für den Einsatz in einer Filterkassette einer Tangentialflussfiltrationsvorrichtung.

In typischen Tangentialflussfiltrationsvorrichtungen werden austauschbare Filterkassetten mit ebenen Membranen oder Wickelmodule mit gewickelten Membranen als Filtermedium verwendet. Um die Deckschichtbildung auf dem Filtermedium zu reduzieren und eine hinreichende Filtrationsleistung zu erzielen, werden geeignete Gewebe oder Vliese als Strömungseinbauten eingesetzt. Beispiele für Strömungseinbauten sind in EP 1 089 805 B1, US 2014/0231339 A1, US 8 980 088 B2 (Filterkassette) und in WO 2015/200691 A1 (Wickelmodul) gezeigt. Solche Strömungseinbauten kommen dabei je nach Ausführungsform der Filtervorrichtung im Retentatkanal und/oder im Permeatkanal zum Einsatz. Die Strömungseinbauten können als sogenannte Abstandshalter (im Retentatkanal: "feed spacer", im Permeatkanal: "permeate spacer") mit einer formgebenden Funktion verwendet werden, sodass sie einen Strömungskanal oder einen Teil davon ausbilden.

Der Einsatz von Strömungseinbauten in Filtervorrichtungen ist jedoch mit einigen Nachteilen verbunden. Die technischen Möglichkeiten hinsichtlich verfügbarer geometrischer Strukturen sind herstellungsbedingt limitiert. So lassen sich beispielsweise bei Geweben Fadendurchmesser, Bindung und Fadenabstände nur sehr begrenzt variierten. Dadurch bedingt wird unter anderem die Deckschichtbildung nicht optimal reduziert. Außerdem können vergleichsweise hohe unerwünschte Druckverluste auftreten. Des Weiteren kann sich die Scherbelastung auf Moleküle in der zu filtrierenden Flüssigkeit negativ auswirken. Die Scherbelastung kann zur Änderung der Moleküleigenschaften führen. In biopharmazeutischen Produkten äußert sich dies durch eine Änderung der Wirkweise oder Verringerung der Langzeitstabilität.

Die Integration von Strömungseinbauten in Form von Fliesen oder Geweben ist insgesamt komplex. Die Herstellungskosten von Filtrationsmodulen sind aufgrund der nötigen Fertigungsschritte hoch. Oftmals ist eine Automatisierung der Arbeitsschritte nur bedingt möglich. Ein weiterer Nachteil ist die Gefahr der Beschädigung von empfindlichen Membranen, wenn diese unbeabsichtigt in Kontakt mit dem Gewebe eines Strömungseinbaus kommen, beispielsweise infolge von Druckstößen im Betrieb, was schlussendlich zum Ausfall der Funktion der Filtervorrichtung führen kann.

Filtervorrichtungen mit strukturierten Strömungseinbauten nach dem Oberbegriff des Anspruchs 1 sind aus US 2014/0175011 A1 und WO 2014/092969 A1 bekannt. Ähnliche Filtervorrichtungen, die als Wickelmodule ausgebildet sind, sind ein WO 2006/040175 A1, EP 1 731 214 A1, EP 3 064 267 A1 und EP 3 064 266 A1 gezeigt.

Aufgabe der Erfindung ist es, eine Filtervorrichtung zu schaffen, bei der die Deckschichtbildung während eines Filtrationsprozesses vermindert, der Druckverlust im Retentat- bzw. Permeatkanal verringert und die Herstellungskosten reduziert sind.

Gelöst wird diese Aufgabe durch eine Filtervorrichtung mit den Merkmalen des Anspruchs 1. Vorteilhafte und zweckmäßige Ausgestaltungen der erfindungsgemäßen Filtervorrichtung sind in den Unteransprüchen angegeben.

Die erfindungsgemäße Filtervorrichtung ist für den Einsatz in einer Filterkassette einer Tangentialflussfiltrationsvorrichtung vorgesehen und umfasst wenigstens einen Fluideinlass, wenigstens einen Retentatauslass und wenigstens einen Permeatauslass. Die Filtervorrichtung umfasst des Weiteren wenigstens eine Membran, die in der Filtervorrichtung einen Retentatabschnitt der Filtervorrichtung von einem Permeatabschnitt trennt. Im Retentatabschnitt und/oder im Permeatabschnitt ist wenigstens ein Strömungseinbau angeordnet, der gemäß der Erfindung aus einem strukturierten Kunststoff-, Silikon-, Metall- oder Keramikteil gebildet ist.

Die Erfindung beruht auf der Erkenntnis, dass die Nachteile von Strömungseinbauten aus Gewebe oder Vlies insbesondere durch geeignet geformte Kunststoff- oder Silikonteile, aber auch durch entsprechende, Metall- oder Keramikteile, überwunden werden können. Unter einem erfindungsgemäßen strukturierten Kunststoff-, Silikon-, Metall- oder Keramikteil ist in diesem Zusammenhang ein vorzugsweise flaches Teil, insbesondere eine Matte, mit einer dreidimensionalen Struktur zu verstehen, die das Strömungsverhalten im Vergleich zu einer glatten Oberfläche signifikant beeinflusst. Die Ausführung der zu verwendenden Struktur kann dabei hinsichtlich der jeweiligen Anwendung angepasst werden, beispielsweise im Hinblick auf besonders scherempfindliche Moleküle oder viskose Flüssigkeiten. Es ist zu beachten, dass nicht zwingend der gesamte Strömungseinbau eine solche Struktur aufweisen muss, solange ein oder mehrere strukturierte Abschnitte vorhanden sind, die mit der entlangströmenden Flüssigkeit in Kontakt kommen und das Strömungsverhalten entsprechend beeinflussen.

Durch die Verwendung von erfindungsgemäßen strukturierten Strömungseinbauten aus Kunststoff, Silikon, Metall oder Keramikteil entfällt die bislang notwendige Bearbeitung von Geweben, wie das Stanzen und das Anbringen von Dichtungskoturen. Die erfindungsgemäßen Strömungseinbauten können in weniger komplexen Arbeitsschritten in die Filtervorrichtungen eingebracht werden.

Gemäß der Erfindung ist der wenigstens eine Strömungseinbau als Matte mit Strukturen ausgebildet, die sich von der Matte erheben. Die Flüssigkeit kann entlang der Matte strömen und wird dabei durch geeignet geformte und angeordnete Strukturen im Strömungsverhalten so beeinflusst, dass sich letztlich nur wenige Rückstände auf dem Filtermedium absetzen, ohne dass es dabei zu einem großen Druckverlust kommt.

Im Hinblick auf eine vereinfachte maschinelle Herstellung ist der wenigstens eine Strömungseinbau der erfindungsgemäßen Filtervorrichtung ein Spritzgussteil. Spritzgussteile eignen sich für eine automatisierte Serienproduktion, sodass identische Strömungseinbauten gleicher Qualität in großen Stückzahlen kostengünstig hergestellt werden können.

Gemäß der Erfindung ist der wenigstens eine Strömungseinbau einstückig mit einem Gehäuse ausgebildet. Dabei kann der Strömungseinbau entweder gleichzeitig mit dem anderen Bauteil hergestellt werden, oder nachträglich auf das Bauteil aufgebracht werden, insbesondere in einem Mehrkomponenten-Spritzgussprozess oder mittels eines anderen bewährten additiven Fertigungsverfahrens.

Im Hinblick auf eine möglichst einfache Gestaltung des Retentatabschnitts bzw. des Permeatabschnitts der Filtervorrichtung kann vorgesehen sein, dass der wenigstens eine Strömungseinbau selbst einen Strömungskanal im Retentatabschnitt bzw. im Permeatabschnitt ausbildet. So kann auf zusätzliche Teile oder Strukturen in diesen Abschnitten verzichtet werden.

Gemäß einem weiteren Aspekt der Erfindung weist der Strömungseinbau eine integrierte Dichtkontur zur Abdichtung der Filtervorrichtung auf. Der Strömungseinbau kann also bereits mit einer Dichtkontur hergestellt werden, sodass ein nachträgliches Anfügen einer Dichtkontur, wie es bei Gewebe- oder Vlies-Strömungseinbauten erforderlich ist, nicht notwendig ist.

Bei der erfindungsgemäßen Filtervorrichtung ist vorgesehen, dass der in den Retentatabschnitt mündende Fluideinlass und/oder der aus dem Retentatabschnitt herausführende Retentatauslass und/oder der aus dem Permeatabschnitt herausführende Permeatauslass in einem Gehäuse der Filtervorrichtung ausgebildet ist.

Die erfindungsgemäße Filtervorrichtung kann auch mit einem Mehrschichtaufbau realisiert werden, bei dem mehrere Filterzellen mit jeweils einem von einer Membran getrennten Retentatabschnitt und Permeatabschnitt aufeinander gestapelt sind, wobei jeweils im Retentatabschnitt und/oder im Permeatabschnitt der Filterzelle ein Strömungseinbau angeordnet ist.

Bei einem solchen Mehrschichtaufbau ist eine Gestaltung vorteilhaft, bei der bereits die Strömungseinbauten Durchgänge zur Ausbildung von Verbindungskanälen in der Filtervorrichtung aufweisen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine geschnittene Seitenansicht einer erfindungsgemäßen Filtervorrichtung mit einer Membran und zwei Strömungseinbauten;
- Figur 2 eine Draufsicht auf einen als Bestandteil eines Gehäusebauteils der Filtervorrichtung von Figur 1 ausgebildeten Strömungseinbau;
- Figur 3 eine Draufsicht auf einen Strömungseinbau mit integrierter Dichtkontur;
- Figuren 4a bis 4i verschiedene Strukturen von Strömungseinbauten;
- Figur 5 eine geschnittene Seitenansicht einer erfindungsgemäßen Filtervorrichtung mit mehreren Membranen und Strömungseinbauten ohne Gehäuse;
- Figur 6 eine Draufsicht auf einen Strömungseinbau der Filtervorrichtung von Figur 5;
- Figur 7 einen Ausschnitt eines Strömungseinbaus aus einem Gewebe nach dem Stand der Technik;
- Figur 8 ein Diagramm zur Filtrationsleistung bei Verwendung verschiedener erfindungsgemäßer Strömungseinbauten im Vergleich zum Stand der Technik; und
- Figur 9 ein Diagramm zum Druckverlust bei Verwendung verschiedener erfindungsgemäßer Strömungseinbauten im Vergleich zum Stand der Technik.

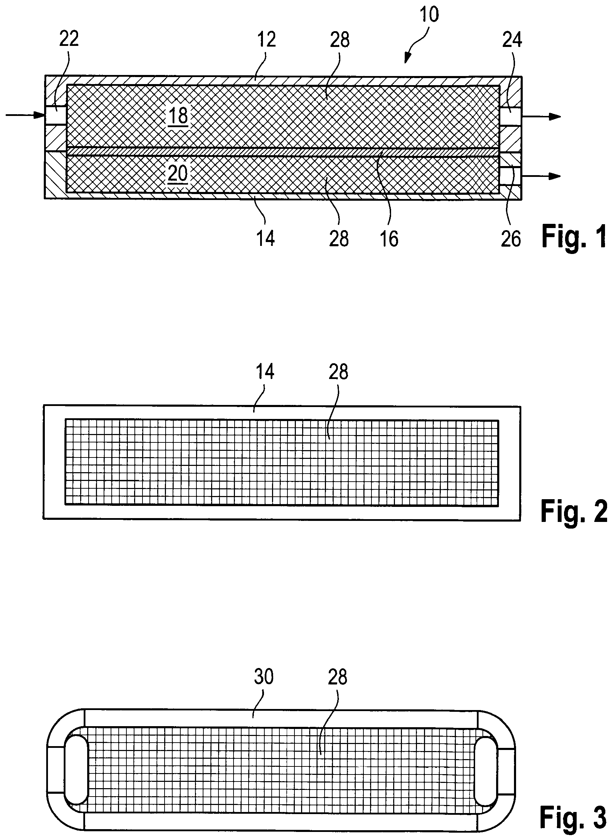

In Figur 1 ist beispielhaft der Aufbau einer als Modul ausgeführten Filtervorrichtung 10, hier in Form einer Filterkassette, gezeigt, die zur Verwendung in einer Tangentialflussfiltrationsvorrichtung vorgesehen ist. In einem Gehäuse, das hier aus zwei Gehäusebauteilen (Deckplatte und Bodenplatte) 12, 14 zusammengesetzt ist, ist eine Membran 16 eingespannt. Die Membran 16 trennt in der Filtervorrichtung 10 einen Retentatabschnitt 18 von einem Permeatabschnitt 20 ab. Im Gehäuse ist ein Fluideinlass 22 ausgebildet, der in den Retentatabschnitt 18 mündet. Außerdem sind im Gehäuse zwei getrennte Fluidauslässe 24, 26 gebildet. Ein Retentatauslass 24 führt aus dem Retentatabschnitt 18 heraus, während der Permeatauslass 26 ein Ausgang aus dem Permeatabschnitt 20 ist.

Bei dem in Figur 1 dargestellten Ausführungsbeispiel sind sowohl im Retentatabschnitt 18 als auch im Permeatabschnitt 20 der Filtervorrichtung 10 Strömungseinbauten 28 eingesetzt. Die Strömungseinbauten 28 bilden auf beiden Seiten der Membran 16 jeweils einen Strömungskanal aus. Somit ist durch einen ersten Strömungseinbau 28 im Retentatabschnitt 18 ein Retentatkanal ausgebildet, der vom Fluideinlass 22 über die Membran 16 zum Retentatauslass 24 führt, und im Permeatabschnitt 20 ist durch einen zweiten Strömungseinbau 28 ein Retentatkanal ausgebildet, der unterhalb der Membran 16 zum Permeatauslass 26 führt.

Die Strömungseinbauten 28 können jeweils als separates Bauteil in das Gehäuse der Filtervorrichtung 10 eingesetzt werden, oder, wie in Figur 2 gezeigt, als einstückiger Bestandteil des Gehäuses bzw. eines Gehäusebauteils 12, 14 ausgebildet sein.

Figur 3 zeigt eine besondere Ausführungsform des Strömungseinbaus 28 mit einer integrierten Dichtkontur 30, d. h. der Strömungseinbau 28 wurde zusammen mit der Dichtkontur 30 im selben Fertigungsprozess hergestellt. Die außen am Strömungseinbau 28 vollständig umlaufende Dichtkontur 30 übernimmt die Abdichtung der Filtervorrichtung 10.

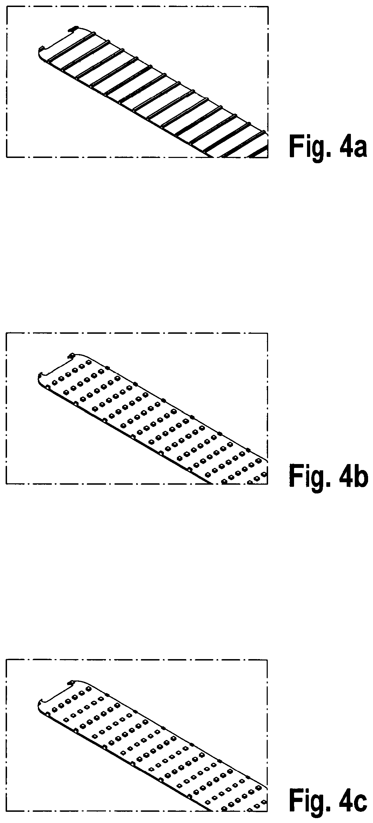

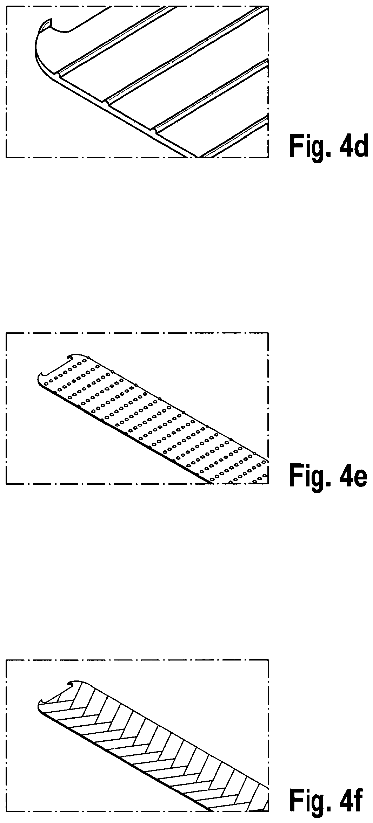

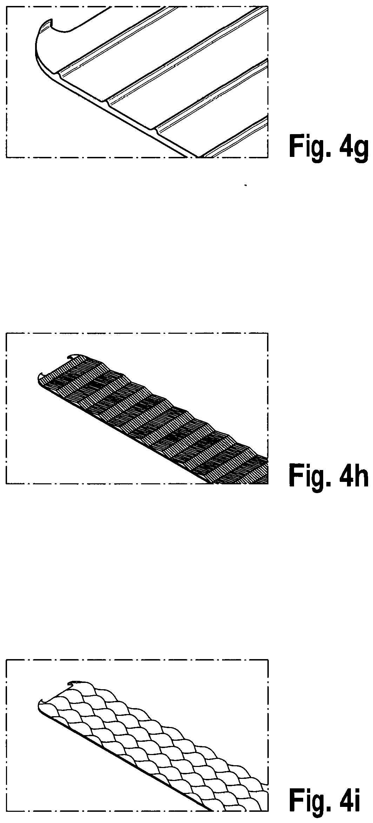

In den Figuren 4a bis 4i sind beispielhaft Ausschnitte von unterschiedlich strukturierten Strömungseinbauten 28 zu sehen. Figur 4a zeigt eine Quaderstruktur, Figur 4b eine Würfelstruktur mit gleich hohen Würfeln, Figur 4c eine Würfelstruktur mit unterschiedlich hohen Würfeln, Figur 4d eine Halbkreisstruktur, Figur 4e eine Halbkugelstruktur, Figur 4f eine Fischgrätenstruktur, Figur 4g eine Wellenstruktur, Figur 4h eine Kegel-Zickzack-Struktur und Figur 4i eine Sinusstruktur. Die Strömungseinbauten 28 können, wie in den einzelnen Figuren gezeigt, als Matten mit erhabenen Strukturelementen ausgebildet sein. Bestimmte Strukturparameter der Strömungseinbauten 28, wie Form, Höhe, Breite und Abstand der Strukturelemente sowie deren Abstand zum Filtermedium, können variieren. Weiterhin können unterschiedliche Strukturen miteinander kombiniert werden.

Die Herstellung der Strömungseinbauten 28 erfolgt vorzugsweise im Spritzgussverfahren mit einem geeigneten Kunststoff oder bevorzugt mit Silikon. Auch eine Ausbildung aus Metall oder Keramik ist möglich.

Es ist vorgesehen, die Strömungseinbauten 28 einstückig mit den Gehäusebauteilen 12, 14 der Filtervorrichtung 10 auszubilden (vgl. Figur 2). Wenn das Gehäuse aus einem bestimmten Werkstoff wie etwa PPTA gebildet wird, dann besteht der eingearbeitete Strömungseinbau ebenfalls aus diesem Material.

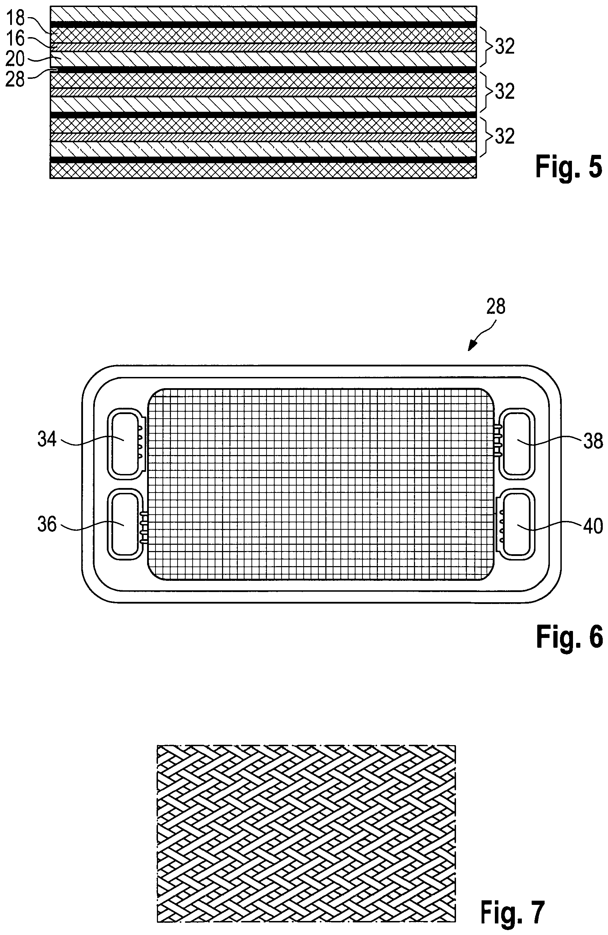

In Figur 5 ist ein Mehrschichtaufbau für eine Filtervorrichtung 10 gezeigt. Mehrere Filterzellen 32, die jeweils eine Membran 16 sowie einen Retentatabschnitt 18 und einen Permeatabschnitt 20 aufweisen, sind aufeinandergestapelt. Der Retentatabschnitt 18 und/oder der Permeatabschnitt 20 sind mit einem Strömungseinbau 28 versehen und bilden dadurch einen Retentatkanal bzw. einen Permeatkanal. Zumindest die inneren Strömungseinbauten 28 trennen jeweils einen Retentatkanal von einem Permeatkanal einer benachbarten Filterzelle.

Wie in Figur 6 gezeigt, kann der Strömungseinbau 28 zusätzliche Durchgänge 34, 36, 38, 40 aufweisen, die in der Filtervorrichtung 10 Bestandteile von Verbindungskanälen in der Filtervorrichtung 10 zur Zu- und Abfuhr der Flüssigkeitsströme bilden.

Im Folgenden werden zwei der oben beschriebenen Strömungseinbauten 28 mit unterschiedlicher Struktur und ein Strömungseinbau nach dem Stand der Technik hinsichtlich der Filtrationsleistung miteinander verglichen. In Figur 7 ist ein solcher herkömmlicher, aus einem Gewebe gebildeter Strömungseinbau nach dem Stand der Technik gezeigt.

Für den Vergleich wurde in eine Tangentialflussfiltrationsvorrichtung eine Filtervorrichtung 10 mit einer Membran 16 mit einer effektiven Filterfläche von 10 cm² eingesetzt. Die Filtrationsleistung wurde mit folgenden Bestückungen des Retentatabschnitts 18 gemessen: (1) kein Strömungseinbau (Leerkanal, Höhe 450 µm) als Referenz, (2) Strömungseinbau aus Gewebe nach dem Stand der Technik, (3) Strömungseinbau 28 mit Fischgrätenstruktur (vgl. Figur 4f) und (4) Strömungseinbau 28 mit Sinusstruktur (vgl. Figur 4i). Im Permeatabschnitt 20 war der Strömungseinbau bei allen Messungen identisch. Auch die Filtrationsparameter waren bei allen Messungen gleich. Der Retentatkanal wurde jeweils mit 10 ml/min überströmt. Der Transmembrandruck betrug 2,2 bar. Als Filtrationslösung wurden eine Lösung mit 50 g/l bzw. 10 g/l Rinderserumalbumin in 10 mM Phosphatpuffer verwendet. Der Permeatfluss wurde für 5 Minuten gemessen.

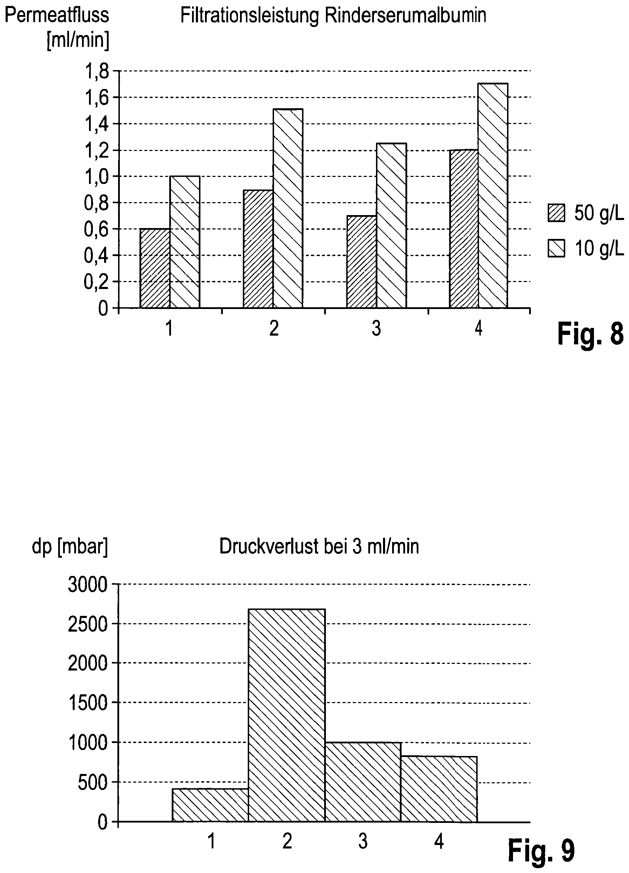

Figur 8 zeigt in einem Diagramm die die Filtrationsmenge pro Zeit für die verschiedenen Messaufbauten. Die linken Balken zeigen das Ergebnis für die 50 g/l Lösungskonzentration und die rechten Balken das Ergebnis für die 10 g/l Lösungskonzentration. Bei beiden Lösungskonzentrationen zeigt der Strömungseinbau 28 mit der Sinusstruktur (4) die höchste Filtrationsleistung. Die Filtrationsleistung des Strömungseinbaus 28 mit der Fischgrätenstruktur (3) ist zwar etwas geringer als die des Strömungseinbaus aus Gewebe nach dem Stand der Technik, aber dennoch höher als bei der Referenzmessung ohne Strömungseinbau im Retentatabschnitt 18.

Des Weiteren wurde für den jeden Messaufbau der Druckverlust ermittelt. Dazu wurde ein 78%iges Glycerin/Wasser-Gemisch mit einer Viskosität von ca. 50 mPas bei 20°C bei einem Volumenstrom von 3 ml/min durch den Retentatkanal gepumpt. Diese Viskosität entspricht auch höher konzentrierten Proteinlösungen (beispielsweise 150-300 g/l einer antikörperhaltigen Lösung).

Figur 9 zeigt in einem Diagramm den Druckverlust für die verschiedenen Messaufbauten. Im Ergebnis ist der Druckabfall der Strömungseinbauten 28 (3) und (4) im Vergleich zu dem Strömungseinbau aus einem Gewebe nach dem Stand der Technik deutlich geringer.

Betrachtet man beide Tests, so ergibt sich, dass insbesondere mit dem Strömungseinbau 28 mit der Sinusstruktur eine hohe Filtrationsleistung in Kombination mit geringem Druckverlust erzielt werden kann.

Die hier vorgestellten Strömungseinbauten 28 eignen sich für den Einsatz in Filterkassetten. Die Strömungseinbauten 28 bzw. die Filtervorrichtungen 10 mit solchen Strömungseinbauten 28 finden in der Tangentialflussfiltration Anwendung, insbesondere in der biopharmazeutischen Industrie, aber auch in der Lebensmittelindustrie.

### Bezugszeichenliste

- 10: Filtervorrichtung
- 12: Gehäusebauteil
- 14: Gehäusebauteil
- 16: Membran
- 18: Retentatabschnitt
- 20: Permeatabschnitt
- 22: Fluideinlass
- 24: Retentatauslass
- 26: Permeatauslass
- 28: Strömungseinbau
- 30: Dichtkontur
- 32: Filterzelle
- 34: Durchgang
- 36: Durchgang
- 38: Durchgang
- 40: Durchgang

## Patentansprüche

1. Filtervorrichtung (10) für den Einsatz in einer Filterkassette einer Tangentialflussfiltrationsvorrichtung, mit wenigstens einem Fluideinlass (22), wenigstens einem Retentatauslass (24) und wenigstens einem Permeatauslass (26) sowie wenigstens einer Membran (16), die in der Filtervorrichtung (10) einen Retentatabschnitt (18) von einem Permeatabschnitt (20) trennt, wobei im Retentatabschnitt (18) und/oder im Permeatabschnitt (20) wenigstens ein Strömungseinbau (28) angeordnet ist, wobei der Strömungseinbau (28) aus einem strukturierten Kunststoff-, Silikon-, Metall- oder Keramikteil gebildet ist, **dadurch gekennzeichnet, dass** der wenigstens eine Fluideinlass (22), der wenigstens eine Retentatauslass (24) und der wenigstens eine Permeatauslass (26) in einem Gehäuse der Filtervorrichtung (10) gebildet sind, dass der wenigstens eine Strömungseinbau (28) als Matte mit Strukturen ausgebildet ist, die sich von der Matte erheben, und dass der wenigstens eine Strömungseinbau (28) ein Spritzgussteil ist, der einstückig mit einem Gehäuse der Filtervorrichtung (10) und aus demselben Material wie das Gehäuse ausgebildet ist.

2. Filtervorrichtung (10) nach Anspruch 1, **dadurch gekennzeichnet, dass** die Matte wenigstens eine der folgenden Strukturen aufweist: Quaderstruktur, Würfelstruktur mit gleich hohen Würfeln, Würfelstruktur mit unterschiedlich hohen Würfeln, Halbkreisstruktur, Halbkugelstruktur, Fischgrätenstruktur, Wellenstruktur, Kegel-Zickzack-Struktur, Sinusstruktur.

3. Filtervorrichtung (10) nach einem der vorhergehenden Ansprüche, **dadurch gekennzeichnet, dass** der wenigstens eine Strömungseinbau (28) einen Strömungskanal im Retentatabschnitt (18) bzw. im Permeatabschnitt (20) ausbildet.

4. Filtervorrichtung (10) nach einem der vorhergehenden Ansprüche, **dadurch gekennzeichnet, dass** der wenigstens eine Strömungseinbau (28) eine integrierte Dichtkontur (30) aufweist.

5. Filtervorrichtung (10) nach einem der vorhergehenden Ansprüche, **dadurch gekennzeichnet, dass** mehrere Filterzellen (32) mit jeweils einem von einer Membran (16) getrennten Retentatabschnitt (18) und Permeatabschnitt (20) aufeinander gestapelt sind, wobei jeweils im Retentatabschnitt (18) und/oder im Permeatabschnitt (20) der Filterzelle (32) wenigstens ein Strömungseinbau (28) angeordnet ist.

6. Filtervorrichtung (10) nach Anspruch 5, **dadurch gekennzeichnet, dass** die Strömungseinbauten (28) Durchgänge (34, 36, 38, 40) zur Ausbildung von Verbindungskanälen in der Filtervorrichtung (10) aufweisen.

7. Filtervorrichtung (10) nach einem der vorhergehenden Ansprüche, **dadurch gekennzeichnet, dass** die Filtervorrichtung (10) als vorgefertigte Filterkassette ausgeführt ist.

## Claims

1. Filter device (10) for use in a filter cartridge of a tangential flow filtration device, comprising at least one fluid inlet (22), at least one retentate outlet (24) and at least one permeate outlet (26), as well as at least one membrane (16) which separates a retentate section (18) from a permeate section (20) in the filter device (10), at least one flow fitting (28) being arranged in the retentate section (18) and/or in the permeate section (20), the flow fitting (28) being formed from a structured plastic part, silicone part, metal part or ceramic part, **characterized in that** the at least one fluid inlet (22), the at least one retentate outlet (24) and the at least one permeate outlet (26) are formed in a housing of the filter device (10), **in that** the at least one flow fitting (28) is formed as a mat with structures that are raised relative to the mat, and **in that** the at least one flow fitting (28) is an injection-molded part that is formed integrally with a housing of the filter device (10) and from the same material as the housing.

2. Filter device (10) according to claim 1, **characterized in that** the mat has at least one of the following structures: cuboid structure, cube structure with cubes of equal height, cube structure with cubes of different height, semicircular structure, hemispherical structure, herringbone structure, wave structure, cone zigzag structure, sinusoidal structure.

3. Filter device (10) according to any one of the preceding claims, **characterized in that** the at least one flow fitting (28) forms a flow channel in the retentate section (18) and/or in the permeate section (20).

4. Filter device (10) according to any one of the preceding claims, **characterized in that** the at least one flow fitting (28) comprises an integrated sealing contour (30).

5. Filter device (10) according to any one of the preceding claims, **characterized in that** a plurality of filter cells (32), each having a retentate section (18) and a permeate section (20) which are separated by a membrane (16), are stacked one on top of the other, at least one flow fitting (28) being arranged in each case in the retentate section (18) and/or in the permeate section (20) of the filter cell (32).

6. Filter device (10) according to claim 5, **characterized in that** the flow fittings (28) have passages (34, 36, 38, 40) for forming connecting channels in the filter device (10).

7. Filter device (10) according to any one of the preceding claims, **characterized in that** the filter device (10) is realized as a prefabricated filter cartridge.

## Revendications

1. Dispositif filtrant (10) pour l'utilisation dans une cartouche filtrante d'un dispositif de filtration à flux tangentiel, comprenant au moins une admission de fluide (22), au moins une sortie de rétentat (24) et au moins une sortie de perméat (26) ainsi qu'au moins une membrane (16) qui sépare une partie rétentat (18) d'une partie perméat (20) dans le dispositif filtrant (10), dans lequel au moins une installation d'écoulement (28) est agencée dans la partie rétentat (18) et/ou dans la partie perméat (20), dans lequel l'installation d'écoulement (28) est formée d'une pièce structurée en plastique, silicone, métal ou céramique, **caractérisé en ce que** la au moins une admission de fluide (22), la au moins une sortie de rétentat (24) et la au moins une sortie de perméat (26) sont formées dans un logement du dispositif filtrant (10), **en ce que** la au moins une installation d'écoulement (28) est conçue en tant que tapis avec structures qui s'élèvent depuis le tapis, et **en ce que** la au moins une installation d'écoulement (28) est une pièce moulée par injection qui est conçue en une seule pièce avec un logement du dispositif filtrant (10) et dans le même matériau que le logement.

2. Dispositif filtrant (10) selon la revendication 1, **caractérisé en ce que** le tapis présente au moins l'une des structures suivantes : structure de parallélépipèdes, structure de cubes avec des cubes de même hauteur, structure de cubes avec des cubes de hauteurs différentes, structure d'hémicycles, structure d'hémisphères, structure d'arêtes de poisson, structure d'ondes, structure de cônes en zigzag, structure de sinus.

3. Dispositif filtrant (10) selon l'une des revendications précédentes, **caractérisé en ce que** la au moins une installation d'écoulement (28) forme un canal d'écoulement dans la partie rétentat (18) et/ou la partie perméat (20).

4. Dispositif filtrant (10) selon l'une des revendications précédentes, **caractérisé en ce que** la au moins une installation d'écoulement (28) présente un contour d'étanchéité (30) intégré.

5. Dispositif filtrant (10) selon l'une des revendications précédentes, **caractérisé en ce que** plusieurs cellules filtrantes (32), ayant respectivement une partie rétentat (18) et une partie perméat (20) séparées par une membrane (16), sont empilées les unes sur les autres, dans lequel au moins une installation d'écoulement (28) est respectivement agencée dans la partie rétentat (18) et/ou dans la partie perméat (20) de la cellule filtrante (32).

6. Dispositif filtrant (10) selon la revendication 5, **caractérisé en ce que** les installations d'écoulement (28) présentent des passages (34, 36, 38, 40) pour la formation de canaux de liaison dans le dispositif filtrant (10).

7. Dispositif filtrant (10) selon l'une des revendications précédentes, **caractérisé en ce que** le dispositif filtrant (10) est réalisé en tant que cartouche filtrante préfabriquée.
